Europäisches Patentamt

(19) **European Patent Office**

Office européen des brevets

(11) Veröffentlichungsnummer: **0 115 634**
**B1**

(12) **EUROPÄISCHE PATENTSCHRIFT**

(45) Veröffentlichungstag der Patentschrift:
**10.12.86**

(51) Int. Cl.⁴: **B 01 J 2/12,** C 09 B 67/10,
**B 01 J 2/28**

(21) Anmeldenummer: **83113117.2**

(22) Anmeldetag: **27.12.83**

(54) **Verfahren zum Entstauben eines abriebempfindlichen Produkts.**

(30) Priorität: **07.01.83 DE 3300374**

(43) Veröffentlichungstag der Anmeldung:
**15.08.84 Patentblatt 84/33**

(45) Bekanntmachung des Hinweises auf die Patenterteilung:
**10.12.86 Patentblatt 86/50**

(84) Benannte Vertragsstaaten:
**CH DE GB LI**

(56) Entgegenhaltungen:
**EP - A - 0 003 302**
**EP - A - 0 015 464**
**EP - A - 0 056 160**

**Soviet Inventions Illustrated Week K 20, 29 June 1983**
**Section J 01**

(73) Patentinhaber: **BAYER AG, Konzernverwaltung RP**
**Patentabteilung, D-5090 Leverkusen 1 Bayerwerk (DE)**

(72) Erfinder: **Vosteen, Bernhard, Dr., Roggendorfstrasse 49,**
**D-5000 Köln 80 (DE)**
Erfinder: **Kempkes, Hartwig, Dipl.-Ing., Freumericher**
**Weg 11, D-5250 Engelskirchen, Remerscheid (DE)**
Erfinder: **De Prycker, Diederik Pieter, Dipl.-Ing., Pastoor**
**Annaertstraat 4, B-9090 Stekene (BE)**
Erfinder: **Keller, Wolfgang, Dipl.-Ing., Römerfeld 17,**
**D-5060 Bergisch-Gladbach 2 (DE)**
Erfinder: **Schultz, Peter, Dipl.-Ing., Schwalbenweg 14,**
**D-5090 Leverkusen (DE)**
Erfinder: **Skerhut, Reiner, Dipl.-Ing., Gronauer**
**Strasse 34, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung richtet sich auf ein Verfahren zum Entstauben eines abriebempfindlichen Produktes durch Verteilen eines flüssigen Entstaubungsmittels auf dem Produkt.

Bei vielen Produkten wird insbesondere aus Umweltschutz- und Arbeitshygiene-Gründen Staubfreiheit verlangt. Soweit das nicht durch physikalische Methoden unmittelbar bei der Granulatherstellung erreicht oder ein Mittel in die Speiseflüssigkeit vor dem Trocknen eingegeben werden kann, geschieht die Entstaubung in einem besonderen Verfahrensschritt durch Zugabe eines flüssigen Entstaubungsmittels zum Trockengut;

Abriebempfindliche Produkte, insbesondere zerstäubungsgetrocknete Produkte («Mikrogranulate») werden bei einer gesonderten Nachbehandlung zumeist weiter zerkleinert, was eine Erhöhung der erforderlichen Entstaubungsmittelmenge bedeutet.

Aufgabe der Erfindung ist es, die Entstaubung abriebempfindlicher Produkte wirtschaftlicher zu gestalten. Die Aufgabe wird dadurch gelöst, dass das Produkt unter Zugabe des Entstaubungsmittels in einem Drehrohr bewegt wird. Weiterbildungen des Verfahrens sind in den Unteransprüchen beschrieben.

Bei einer chargenweise betriebenen Entstaubung sind an das Drehrohr keine besonderen Bedingungen zu stellen. Bei der bevorzugten kontinuierlichen Arbeitsweise wird das Produkt auf einer Stirnseite des Drehrohrs eingegeben und, da es üblicherweise waagerecht betrieben wird, sind dann Förderelemente im Drehrohrinneren erforderlich. Besonders geeignet als förderndes Drehrohr ist das Wendeldrehrohr, bei dem wenigstens in Teilbereichen Leitbleche an der Innenwand befestigt sind. Das Drehrohr kann eine zylindrische oder auch prismatische Form haben, ein rechteckiger oder dreieckiger Querschnitt ist dabei bevorzugt (DE-OS 3 027 187). Vom Wendeldrehrohr ist bekannt, dass nicht die gesamte Innenfläche mit Förderelementen bedeckt sein muss. Bei dem erfindungsgemässen Verfahren hat sich gezeigt, dass es bei einem quadratischen Wendeldrehrohr ausreichen kann, wenn auf einer Seite schrägstehende Leitbleche angebracht sind. Bei dem erfindungsgemässen Verfahren kommt es bei der Bewegung des Produktes im Drehrohr nicht darauf an, dass die Drehachse im Inneren des Drehrohres liegt. Insbesondere sind auch solche Apparate geeignet, bei denen an zwei Stirnseiten mehrere parallel verlaufende Rohre befestigt sind, die sich zusammen drehen, und bei denen entweder das Gut parallel durch alle Rohre von einer Stirnseite zur anderen transportiert wird oder wo das Produkt durch hintereinandergeschaltete Rohre den Apparat mehrmals in Längsrichtung durchlaufen muss (EP 0 017 797). Das erfindungsgemässe Verfahren zeichnet sich durch folgende Vorteile aus:

Es ist sehr betriebssicher und wirtschaftlich.

Es ist sehr flexibel an verschiedene Aufgaben anpassbar; Drehrohrlänge und -querschnitt, Drehgeschwindigkeit, Fördergeschwindigkeit, Füllgrad sind in weiten Bereichen veränderbar.

Wegen der kornschonenden Behandlung im Drehrohr wird durch diesen Verfahrensschritt der Staubanteil praktisch nicht vergrössert. Das bedeutet eine beträchtliche Reduktion der benötigten Entstaubungsmittelmenge gegenüber bekannten Verfahren.

Bei Wendelrohren kann gezielt die Verweilzeit eingestellt werden.

Es zeigt sich, dass relativ schnell eine gleichmässige Verteilung des Entstaubungsmittels auf dem Produkt im Drehrohr erreicht wird. Da das Drehrohr auch relativ kurz gebaut werden kann, kann das Verfahren normalerweise auch bei bereits bestehenden Anlagen nachträglich angekoppelt werden. Bei Einsatz eines hin und her fördernden Drehrohrs, kann das entstaubte Produkt praktisch an derselben Stelle entnommen werden wo es eingegeben wird.

Das erfindungsgemässe Verfahren ist beispielhaft in der Zeichnung dargestellt und im folgenden weiter beschrieben. Es zeigen:

Fig. 1 einen Drehrohrapparat, der uner einem Sprühtrockner angebracht ist;

Fig. 2 Querschnitt durch den Drehrohrapparat, enthaltend 2 Wendelrohre.

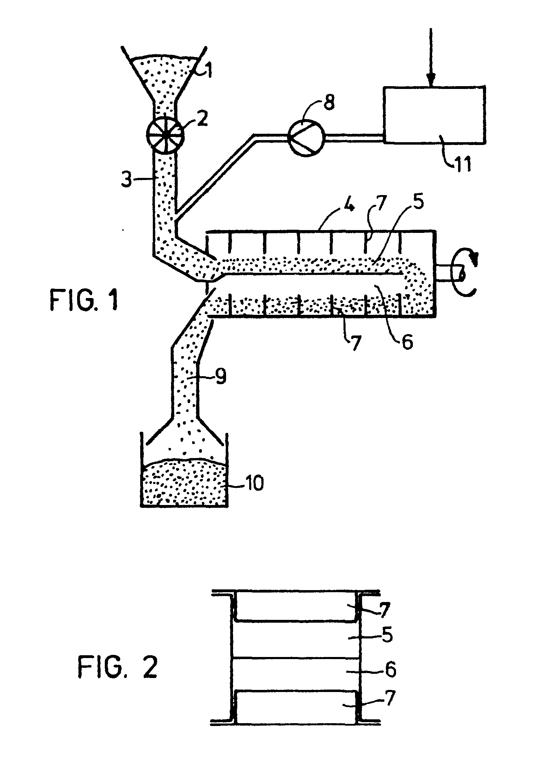

Fig. 1 zeigt die Entstaubung von Farbstoffen. Das nichtgesichtete Granulat tritt am Boden eines Sprühtrockners 1 aus. Die Dosiervorrichtung 2 fördert kontinuierlich das Produkt 3 in das Drehrohr 4. In diesem Beispiel besteht das Drehrohr 4 aus zwei parallel geschalteten Wendelrohren 5, 6.

Ein Querschnitt durch das Drehrohr 4 ist in Fig. 2 dargestellt. Man erkennt, dass bei dem rechteckigen Querschnitt der Wendelrohre 5 und 6 sich Höhe zu Breite wie 1:2 verhalten. Nur an einer Innenseite jedes Wendelrohres 5, 6 sind schrägstehende Leichtbleche 7 angebracht. Die Verweilzeit und die Fördermenge werden durch die Baulänge des Rohrs, die Drehgeschwindigkeit, die Förderelemente und den Füllgrad beeinflusst.

Das Entstaubungsmittel wird ausserhalb des Drehrohrs 5 in das Granulat eingebracht. Die Dosierpumpe 8 ist mit der Fördervorrichtung 2 gekoppelt. Ein Verdüsen des Entstaubungsmittels war in diesem Beispiel nicht erforderlich; eine Nesterbildung konnte mikroskopisch im behandelten Produkt 9 nicht nachgewiesen werden. An der Fig. 1 ist auch erkennbar, dass die Zwischenschaltung eines Drehrohrs 5 zwischen Sprühtrockner 1 und Abfüllung 10 in bestehenden Anlagen fast immer möglich sein dürfte.

Nach dem erfindungsgemässen Verfahren wurden Textilfarbstoffe/Papierfarbstoffe entstaubt; als Entstaubungsmittel kommen beispielsweise Mineralöle, Mineralöl/Emulgator-Mischungen oder Phthalsäureester in Frage. Es wurden weniger als 2 Gew.-% (bezogen auf das Trockenprodukt) Entstaubungsmittel zugegeben, selbst bei Zugaben von 0,3 Gew.-% konnte eine voll befriedigende Entstaubung erzielt werden. In einem Vorversuch wurden die empfindlichen hohlkugelförmigen Farbstoffpartikel 8 Stunden lang in einem nicht fördernden Drehrohr bei einem Füllgrad von 33% ohne Entstaubungsmittel-Zugabe bei einer Drehzahl von 10 min$^{-1}$ einem 8stündigen Belastungstest unterworfen. Der (optisch gemessene) Staubwert hat sich durch diese Behandlung nicht verändert.

Bei der Entstaubung zeigt sich, dass die Mischzeit um so kleiner sein kann, je höher die zugegebene Entstaubungsmittelmenge ist. 5 Gew.-%, in vielen Fällen auch weniger als 1 Gew.-% (bezogen aus das Trokkenprodukt) sind ausreichend. Es sind damit keine untragbar langen Mischzeiten erforderlich. Bei einem Ölzusatz von 0,3 Gew.-% war eine Mindestmischzeit von 5 bis 10 Minuten erforderlich. Bei typischen Umdrehungsgeschwindigkeiten von 10 min$^{-1}$ sind 50 bis 100 Drehrohrumdrehungen ausreichend. Mischzeiten über 20 Minuten waren selten nötig.

In diesem Beispiel wurde das Drehrohr während der Behandlung mit Kühlwasser von 25°C ausgekühlt; die Produkttemperatur wurde während des Durchgangs von 70°C auf 35°C abgesenkt.

**Patentansprüche**

1. Verfahren zum Entstauben eines abriebempfindlichen Produkts durch Verteilen eines flüssigen Entstaubungsmittels auf dem Produkt, dadurch gekennzeichnet, dass das Produkt unter Zugabe des Entstaubungsmittels in einem Drehrohr bewegt wird.

2. Verfahren nach Anspruch 1, dadurch gekennzeichnet, dass kontinuierlich mit der Eingabe des Produkts in ein förderndes Drehrohr das Entstaubungsmittel zugegeben und das Produkt kontinuierlich entnommen wird.

3. Verfahren nach Anspruch 2, dadurch gekennzeichnet, dass das Produkt in ein Wendeldrehrohr eingegeben wird.

4. Verfahren nach einem der Ansprüche 1 bis 3, dadurch gekennzeichnet, dass nach 20 bis 1000, vorzugsweise 50 bis 200 Umdrehungen des Drehrohrs das Produkt entnommen wird.

5. Verfahren nach einem der Ansprüche 1 bis 4, dadurch gekennzeichnet, dass zum Produkt weniger als 5 Gew.-% (bezogen auf das Trockenprodukt) flüssiges Entstaubungsmittel zugegeben werden.

6. Verfahren nach einem der Ansprüche 1 bis 4, dadurch gekennzeichnet, dass zum Produkt weniger als 1 Gew.-% (bezogen auf das Trockenprodukt) zugegeben werden.

7. Verfahren nach einem der Ansprüche 1 bis 6, dadurch gekennzeichnet, dass das flüssige Entstaubungsmittel in das Drehrohr eingedüst wird.

8. Verfahren nach einem der Ansprüche 1 bis 6, dadurch gekennzeichnet, dass des Entstaubungsmittel auf das Produkt getropft wird.

9. Verfahren nach einem der Ansprüche 1 bis 8, dadurch gekennzeichnet, dass durch Heizung oder Kühlung des Drehrohres das Produkt thermisch beeinflusst wird.

10. Verfahren nach einem der Ansprüche 1 bis 9 zum Beaufschlagen von Farbstoffen mit staubbindenden Mitteln.

**Claims**

1. Process for dedusting an abrasion-sensitive product by distributing a liquid dedusting agent on the product, characterised in that the product is agitated in a revolving tube while the dedusting agent is added.

2. Process according to Claim 1, characterised in that as the product is introduced into a conveying revolving tube the dedusting agent is continuously added and the product is continuously removed.

3. Process according to Claim 2, characterised in that the product is introduced into a helix revolving tube.

4. Process according to one of Claims 1 to 3, characterised in that after 20 to 1000, preferably 50 to 200, revolutions of the revolving tube the product is removed.

5. Process according to one of Claims 1 to 4, characterised in that less than 5% by weight (based on the dry product) of liquid dedusting agent are added to the product.

6. Process according to one of Claims 1 to 4, characterised in that less than 1% by weight (based on the dry product) is added to the product.

7. Process according to one of Claims 1 to 6, characterised in that the liquid dedusting agent is nozzle-injected into the revolving tube.

8. Process according to one of Claims 1 to 6, characterised in that the dedusting agent is dripped on to the product.

9. Process according to one of Claims 1 to 8, characterised in that by heating or cooling the revolving tube the product is influenced thermally.

10. Process according to one of Claims 1 to 9 for applying dust-bonding agents to dyestuffs.

**Revendications**

1. Procédé pour dépoussiérer un produit sensible à l'abrasion en répartissant un agent liquide de dépoussièrage sur le produit, caractérisé en ce que le produit est déplacé dans un tube rotatif en lui ajoutant l'agent de dépoussièrage.

2. Procédé selon la revendication 1, caractérisé en ce que l'agent de dépoussièrage est ajouté de façon continue lors de l'entrée du produit dans un tube rotatif de transport et en ce que le produit en est retiré de façon continue.

3. Procédé selon la revendication 2, caractérisé en ce que le produit est introduit dans un tube rotatif spiralé.

4. Procédé selon l'une des revendications 1 à 3, caractérisé en ce qu'après 20 à 1000 rotations, de préférence, 50 à 200 rotations du tube rotatif, le produit est enlevé.

5. Procédé selon l'une des revendications 1 à 4 caractérisé en ce qu'on ajoute au produit moins de 5% en poids de l'agent liquide de dépoussièrage (en référence au produit sec).

6. Procédé selon l'une des revendications 1 à 4, caractérisé en ce qu'on ajoute au produit moins de 1% en poids (en référence au produit sec).

7. Procédé selon l'une des revendications 1 à 6, caractérisé en ce qu'on fait entrer l'agent liquide de dépoussièrage dans le tube rotatif par giclage.

8. Procédé selon l'une des revendications 1 à 6 caractérisé en ce qu'on égoutte l'agent de dépoussièrage sur le produit.

9. Procédé selon l'une des revendications 1 à 8, caractérisé en ce qu'on influe thermiquement sur le produit par chauffage ou refroidissement du tube rotatif.

10. Procédé selon l'une des revendications 1 à 9 pour traiter des matières colorantes par des agents de liaison des poussières.

FIG. 1

FIG. 2